# EUROPEAN PATENT APPLICATION

(11) **EP 4 474 166 A1**
(43) Date of publication of application: **11.12.2024**
(21) Application number: 23747092.7
(22) Date of filing: 27.01.2023
(51) Int. Cl.: B43K 7/08

(54) **REFILL FOR WRITING INSTRUMENT**

(30) Priority: 31.01.2022 JP 2022013731
(71) Applicant: Kabushiki Kaisha Pilot Corporation (also trading as Pilot Corporation), Tokyo 104-8304 (JP)
(72) Inventor: KOZAKI Yoshihito, Tokyo 104-8304 (JP); FUKUTA Masahiro, Tokyo 104-8304 (JP)
(74) Representative: HGF
(86) International application number: PCT/JP2023/002661
(87) International publication number: WO 2023/145882

(57) **Abstract**

A writing instrument refill (10) includes an ink storage tube (13) storing an ink (14) therein, a pen tip (11) provided on a distal end side of the ink storage tube (13) and including a writing part (111), and a pen tip holder (12) to which the ink storage tube (13) and the pen tip (11) are respectively connected. The ink storage tube (13) is a tubular body made of a metal. A rear end side outer circumferential surface of the pen tip holder (12) and a front end side inner circumferential surface of the ink storage tube (13) are press-fit inserted. A circumferential swaged part (131) is formed on a front end side outer circumferential surface of the ink storage tube (13), and an outer diameter of the ink storage tube (13) in the vicinity of the circumferential swaged part (131) is φ4.5 mm or more. The circumferential swaged part (131) is formed of a straight surface (132) having a constant outer diameter in an axial direction and tapered surfaces (133) formed on both front and rear sides of the straight surface (132).

## Description

### [Technical Field]

The present invention relates to a writing instrument refill.

Priority is claimed on Japanese Patent Application No. 2022-013731 filed on January 31, 2022, the content of which is incorporated herein by reference.

### [Background Art]

Patent Document 1 discloses a thermochromic writing instrument refill in which a thermochromic ink is stored in an ink storage tube, a pen tip capable of discharging the thermochromic ink is press-fitted into a front end portion of a pen tip holder, and a rear end portion of the pen tip holder is press-fitted into a front end portion of the ink storage tube.

A configuration of the writing instrument refill is such that the ink storage tube is formed of a metal material, and a protruding part protruding toward the inside of the ink storage tube is provided around a circumference of the front end portion of the ink storage tube. According to the writing instrument refill, photodegradation of the thermochromic ink can be prevented, and deterioration in assembly easiness and ink leakage can be curbed.

Further, the thermochromic writing instrument refill described in Patent Document 1 is exemplified as a multi-core writing instrument refill, but it is also exemplified that it may be a so-called single-core writing instrument refill in which only one refill is inserted into the barrel.

### [Citation List]

### [Patent Document]

[Patent Document 1]
Japanese Unexamined Patent Application, First Publication No. 2015-3452

### [Summary of Invention]

### [Technical Problem]

When the technology disclosed in Patent Document 1 is applied to a refill (a single-core writing instrument refill that is generally large in outer diameter) in which the ink storage tube is made of a metal material and an outer diameter of the ink storage tube is φ4.5 mm or more, there is a likelihood that ink leakage will occur. The reason for this will be described in detail later.

Generally, in a single-core writing instrument refill, an outer diameter of the ink storage tube is larger than that of a multi-core writing instrument refill to load a larger amount of ink. For example, generally, an outer diameter of the ink storage tube of a multi-core writing instrument refill is φ2.5 mm or more and ϕ4.0 mm or less, and an outer diameter of the ink storage tube of a single-core writing instrument refill is φ4.5 mm or more.

Accordingly, an outer diameter of a fitting portion at a rear end of a pen tip holder of the single-core writing instrument refill is larger than an outer diameter of a fitting portion at a rear end of a pen tip holder of the multi-core writing instrument refill. Here, when the outer diameter of the fitting portion at the rear end of the pen tip holder becomes larger, there is a likelihood that shrinkage or warping of the fitting portion at the rear end of the pen tip holder will increase. Further, the term "shrinkage and warping" as used in the present specification refers to deformation such as decrease in diameter due to a temperature drop after molding when the pen tip holder is manufactured by injection molding.

Further, the ink storage tube formed of a metal material has lower flexibility than an ink storage tube formed of a resin material. Specifically, since the ink storage tube is made of a metal, it does not extend or contract (increase or decrease in diameter) in a radial direction. That is, the fitting portion of the pen tip holder that fits appropriately with the ink storage tube has a small tolerance of dimensional variation. Further, if the dimensions fall outside a range for appropriate fitting, there is a likelihood that ink leakage will occur.

From the above, when the technology disclosed in Patent Document 1 is applied to a refill (a single-core writing instrument refill that is generally large in outer diameter) in which the ink storage tube is made of a metal material and an outer diameter of the ink storage tube is φ4.5 mm or more, there is a likelihood that ink leakage will occur.

The present invention has been made in view of the above findings. An objective of the present invention is to provide a writing instrument refill in which ink leakage can be curbed in a refill having a metal ink storage tube with an outer diameter of φ4.5 mm or more.

### [Solution to Problem]

In order to solve the above-described problems, the present invention provides the following means.

### [Aspect 1 of present invention]

A writing instrument refill including an ink storage tube storing an ink therein, a pen tip provided on a distal end side of the ink storage tube and including a writing part, and a pen tip holder to which the ink storage tube and the pen tip are respectively connected, in which the ink storage tube is a tubular body made of a metal, a rear end side outer circumferential surface of the pen tip holder and a front end side inner circumferential surface of the ink storage tube are press-fit inserted and a circumferential swaged part is formed on a front end side outer circumferential surface of the ink storage tube, an outer diameter of the ink storage tube in the vicinity of the circumferential swaged part is φ4.5 mm or more, and the circumferential swaged part is formed of a straight surface having a constant outer diameter in an axial direction and tapered surfaces formed on both front and rear sides of the straight surface.

According to the aspect of the present invention, when an outer diameter of the ink storage tube in the vicinity of the circumferential swaged part is φ4.5 mm or more, a shape of the circumferential swaged part can be reliably formed by the circumferential swaged part being formed of the straight surface having a constant outer diameter in the axial direction and the tapered surfaces formed on both front and rear sides of the straight surface. Therefore, ink leakage from a fitting portion (press-fitting portion) between the pen tip holder and the ink storage tube can be curbed. Also, since the circumferential swaged part includes the straight surface, a shape of an inner surface of the swaged part is stabilized, stable sealing performance can be obtained, and thereby ink leakage can be curbed. Further, the inner surface of the swaged part refers to an inner surface portion of the inner surface (inner circumferential surface) of the ink storage tube at which the circumferential swaged part is positioned.

### [Aspect 2 of present invention]

The writing instrument refill according to aspect 1, in which a conditional expression W ≥ t may be satisfied provided that an axial length of the straight surface is W and a thickness of the ink storage tube is t.

In this case, when the straight surface having the axial length W equal to or larger than the thickness t of the ink storage tube is formed, deformation of an outer surface of the ink storage tube due to swaging is reliably reflected on an inner surface of the ink storage tube, and more reliable sealing performance can be obtained by the circumferential swaged part.

### [Aspect 3 of present invention]

The writing instrument refill according to aspect 2, in which a conditional expression A ≤ t may be satisfied provided that a radial depth of the circumferential swaged part is A.

In this case, when the radial depth A of the circumferential swaged part is suppressed to the thickness t or less of the ink storage tube, a thickness variation of the circumferential swaged part is suppressed, and reliable fitting performance can be maintained.

### [Aspect 4 of present invention]

The writing instrument refill according to any one of aspects 1 to 3, in which a conditional expression 1 ≤ W/t ≤ 4 may be satisfied provided that an axial length of the straight surface is W and a thickness of the ink storage tube is t.

When a value of W/t is 1 or more, the axial length W of the straight surface is stably secured, and liquid tightness (airtightness) of the fitting portion between the pen tip holder and the ink storage tube is maintained satisfactorily.

Also, when the value of W/t is 4 or less, the axial length W of the straight surface becoming too large can be curbed, and a force required for beading method becoming excessive can be curbed when the circumferential swaged part is formed. Therefore, it is possible to stably provide a clear and sharp shape (beading shape) of the circumferential swaged part without reducing production efficiency (productivity). Stable sealing performance can be obtained by the circumferential swaged part, and occurrence of ink leakage can be curbed more reliably. Further, the term "beading method" as used in the present specification refers to processing of providing a circumferential groove on a circumference of a tubular body, and more specifically, refers to circumferential swaging processing that swages and fixes a tubular body and another member inserted into the tubular body by, for example, pressing an outer circumferential surface of the tubular body toward the inside in a radial direction over the entire circumference using a roll or the like.

### [Aspect 5 of present invention]

The writing instrument refill according to any one of aspects 1 to 4, in which an axial length W of the straight surface may be 0.8 mm or less.

In this case, the axial length W of the straight surface becoming too large can be curbed, and a force required for beading method becoming excessive can be curbed when the circumferential swaged part is formed. Therefore, it is possible to stably provide a clear and sharp shape (beading shape) of the circumferential swaged part without reducing production efficiency (productivity). Stable sealing performance can be obtained by the circumferential swaged part, and occurrence of ink leakage can be curbed more reliably.

### [Aspect 6 of present invention]

The writing instrument refill according to any one of aspects 1 to 5, in which the pen tip holder may have a plurality of annular protrusions disposed to be aligned in the axial direction on the rear end side outer circumferential surface of the pen tip holder, and the circumferential swaged part may be disposed between the plurality of annular protrusions in the axial direction.

In this case, since the annular protrusion is provided on the rear end side outer circumferential surface of the pen tip holder, when the rear end side outer circumferential surface of the pen tip holder and the front end side inner circumferential surface of the ink storage tube are press-fit inserted, a dimension setting in which the rear end side outer circumferential surface of the pen tip holder is not scraped by the ink storage tube is facilitated.

Also, since the plurality of annular protrusions are provided to be aligned in the axial direction, when the rear end side outer circumferential surface of the pen tip holder and the front end side inner circumferential surface of the ink storage tube are press-fit inserted, a stable press-fit insertion state can be obtained without generating any wobbling of the pen tip holder.

Also, the circumferential swaged part is disposed between the plurality of annular protrusions in the axial direction. Thereby, during swaging processing, wobbling of the pen tip holder is less likely to be generated, and highly accurate beading method can be performed stably. A fitted state between the pen tip holder and the ink storage tube becomes more stable.

### [Aspect 7 of present invention]

The writing instrument refill according to aspect 6, in which the circumferential swaged part may be disposed apart from the annular protrusions in the axial direction.

As in the configuration described above, when the circumferential swaged part is disposed apart from the annular protrusion, an effect of suppressing generation of wobbling of the pen tip holder during swaging processing can be more stably obtained.

### [Aspect 8 of present invention]

The writing instrument refill according to any one of aspects 1 to 6, in which the pen tip holder may have an annular protrusion disposed on the rear end side outer circumferential surface of the pen tip holder, and the circumferential swaged part may be disposed to overlap the annular protrusion when viewed from a radial direction.

As in the configuration described above, when the circumferential swaged part is disposed to overlap the annular protrusion when viewed from the radial direction, adhesion (sealing properties) between the rear end side outer circumferential surface of the pen tip holder and the front end side inner circumferential surface of the ink storage tube can be improved.

### [Aspect 9 of present invention]

The writing instrument refill according to any one of aspects 1 to 8, in which the ink may be a thermochromic ink.

Since the ink storage tube of the aspect of the present invention is a metal tubular body that does not allow external light to pass through to the inside, photodegradation of the thermochromic ink can be avoided, and moisture of the water-based thermochromic ink permeating through the ink storage tube during long-term storage can be curbed.

### [Advantageous Effects of Invention]

According to the writing instrument refill of the aspect of the present invention, ink leakage can be curbed in a refill having a metal ink storage tube with an outer diameter of φ4.5 mm or more.

### [Brief Description of Drawings]

FIG. 1 is a front view (side view) of a writing instrument refill according to a first embodiment of the present invention.
FIG. 2 is an enlarged longitudinal sectional view illustrating part C in FIG. 1, and is a view illustrating a vicinity of a pen tip holder.
FIG. 3 is an enlarged longitudinal sectional view illustrating part D in FIG. 2, and is a first view illustrating a vicinity of a circumferential swaged part.
FIG. 4 is an enlarged longitudinal sectional view illustrating part D in FIG. 2, and is a second view illustrating the vicinity of the circumferential swaged part.
FIG. 5 is a view illustrating a vicinity of a circumferential swaged part of a writing instrument refill according to a second embodiment of the present invention, and is a longitudinal sectional view corresponding to FIGS. 3 and 4.

### [Description of Embodiments]

Hereinafter, two embodiments of the present invention will be described with reference to the drawings. However, the present invention is not limited to the following embodiments. Further, in a writing instrument refill 10 of the present embodiment, "front" refers to a pen tip 11 side, and "rear" refers to a side opposite thereto. Definition of directions in the present embodiment will be described later separately.

### <First embodiment>

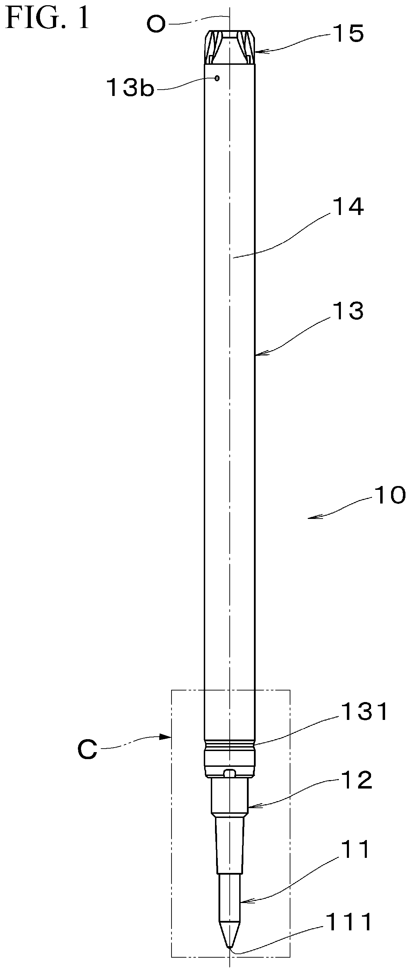

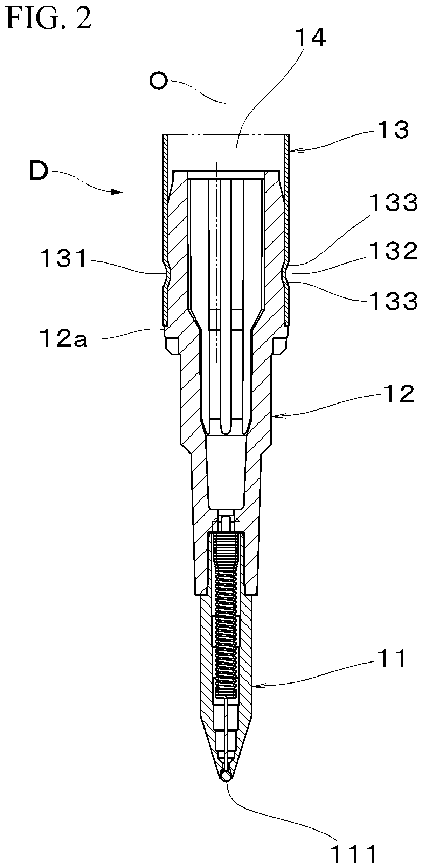

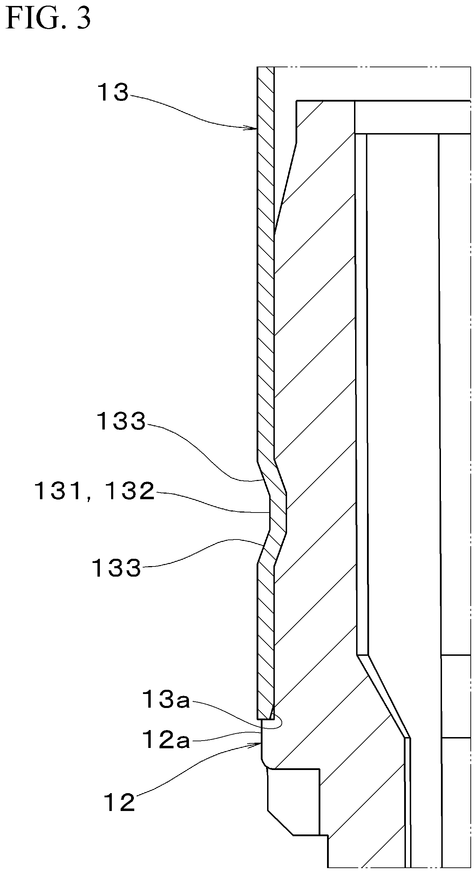

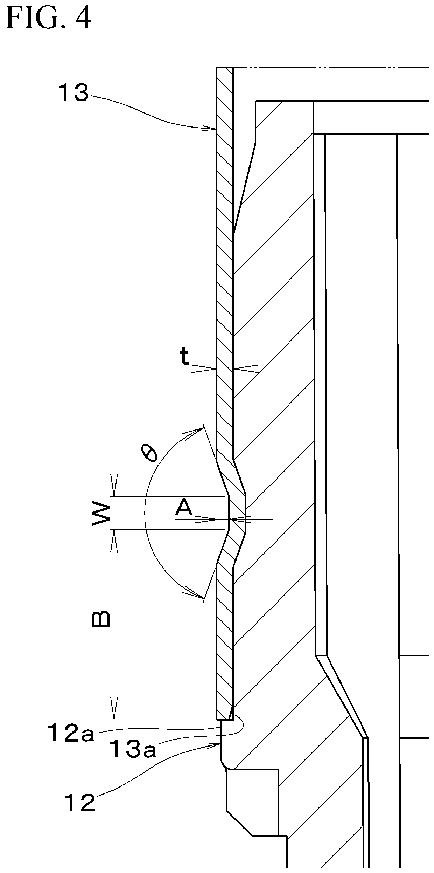

FIG. 1 is a front view of a writing instrument refill 10 in a first embodiment of the present invention. Further, FIG. 1 may be rephrased as a side view or the like of the writing instrument refill 10. It is preferable that the writing instrument refill 10 of the present invention be used for a single-core writing instrument. FIG. 2 is an enlarged longitudinal sectional view illustrating part C in FIG. 1, and is a view illustrating a vicinity of a pen tip holder 12. FIGS. 3 and 4 are enlarged longitudinal sectional views illustrating part D in FIG. 2, and are first and second views illustrating a vicinity of a circumferential swaged part 131. The writing instrument refill 10 illustrated in FIGS. 1 to 4 is a single-core writing instrument refill, and illustration of a writing instrument main body that houses the single-core writing instrument refill is omitted.

As illustrated in FIG. 1, the writing instrument refill 10 of the present embodiment has a tubular shape centered on a central axis O. Specifically, the writing instrument refill 10 has a substantially cylindrical shape in multiple stages. The writing instrument refill 10 includes an ink storage tube 13 that stores an ink 14 therein, a pen tip 11 provided on a distal end side of the ink storage tube 13 and including a writing part 111, a pen tip holder 12 to which the ink storage tube 13 and the pen tip 11 are respectively connected, a tail plug 15 provided on a rear end side of the ink storage tube 13, and the ink 14 and an ink backflow preventer (not illustrated) provided in the ink storage tube 13. The ink storage tube 13, the pen tip 11, the pen tip holder 12, and the tail plug 15 are disposed coaxially with each other with the central axis O as a common axis.

Definition of directions used in the present embodiment will be described.

In the present embodiment, a direction in which the central axis O of the writing instrument refill 10 extends, that is, a direction along the central axis O, is referred to as an axial direction or a front-rear direction. In the axial direction (front-rear direction), the ink storage tube 13 and the pen tip 11 are disposed at positions different from each other. In the axial direction, a side in a direction from the ink storage tube 13 to the pen tip 11 is referred to as a front side, and a side in a direction from the pen tip 11 to the ink storage tube 13 is referred to as a rear side. Further, the front side may be rephrased as a distal end side, one axial side, or the like. The rear side may be rephrased as the other axial side or the like.

A direction orthogonal to the central axis O is referred to as a radial direction. In the radial direction, a direction approaching the central axis O is referred to as radially inward, and a direction away from the central axis O is referred to as a radially outward.

A direction of revolving around the central axis O is referred to as a circumferential direction.

Each of components of the writing instrument refill 10 will be described in detail.

### <Pen tip>

The pen tip 11 is disposed at a front end portion of the writing instrument refill 10. The pen tip 11 has a substantially cylindrical shape and extends in the axial direction. As illustrated in FIG. 2, the pen tip 11 is formed of a ballpoint pen tip in which a ball is rotatably held in a ball holding chamber at a front end portion of the pen tip 11. A spring that constantly presses the ball against an inwardly facing front end edge portion inner surface of the front end of the pen tip 11 is provided to be disposed behind the ball.

The spring is configured to include a rod part, for example, at a front end portion of a compression coil spring. A front end of the rod part is in contact with a rear surface of the ball. When not writing, the ball is brought into close contact with the inwardly facing front end edge portion inner surface of the front end of the pen tip 11 by a forward biasing of the spring. Thereby, leakage of the ink 14 from the front end of the pen tip 11 and evaporation of the ink 14 are prevented.

### <Pen tip holder>

The pen tip holder 12 is disposed between the pen tip 11 and the ink storage tube 13 in the axial direction. Specifically, the pen tip holder 12 is provided on a rear side of the pen tip 11 and on the front side of the ink storage tube 13. The pen tip holder 12 has a substantially cylindrical shape in multiple stages and extends in the axial direction. A diameter dimension of the pen tip holder 12 decreases in stages from a rear end portion of the pen tip holder 12 toward the front. In other words, the pen tip holder 12 has a largest diameter dimension at the rear end portion, and the diameter decreases in stages from the rear end portion toward the front side. More specifically, the rear end portion of the pen tip holder 12 has a flange part 12a that protrudes radially outward more than the other portion of the rear end portion. The flange part 12a is disposed at an end portion on the front side in the rear end portion of the pen tip holder 12, extends in the circumferential direction, and has a largest diameter dimension in the rear end portion. Further, in the present embodiment, a portion of the rear end portion of the pen tip holder 12 on a rear side of the flange part 12a may be simply referred to as a "rear end portion of the pen tip holder 12".

As illustrated in FIGS. 1 to 4, a rear end side outer circumferential surface of the pen tip holder 12 and a front end side inner circumferential surface of the ink storage tube 13 are press-fit inserted. That is, the rear end portion of the pen tip holder 12 (the portion on a rear side of the flange part 12a) is fitted into the front end portion of the ink storage tube 13 by press-fitting. Further, in the present embodiment, the rear end side outer circumferential surface may be rephrased as a rear end portion outer circumferential surface or the like. Also, the front end side inner circumferential surface may be referred to as a front end portion inner circumferential surface or the like. In the present embodiment, the rear end side outer circumferential surface of the pen tip holder 12 (outer circumferential surface portion positioned on a rear side of the flange part 12a) is a cylindrical body having the same outer diameter without a protrusion or the like. It is preferable that an outer diameter of the rear end side outer circumferential surface of the pen tip holder 12 be slightly larger than an inner diameter of the front end side inner circumferential surface of the ink storage tube 13. The dimensions are preferably such that the rear end side outer circumferential surface of the pen tip holder 12 is not scraped when the pen tip holder 12 and the ink storage tube 13 are press-fitted. Also, a front end surface of the ink storage tube 13 is in contact with a rear end surface of the flange part 12a of the pen tip holder 12.

Also, in the present embodiment, the pen tip holder 12 is formed of a (semi)transparent resin (for example, a polypropylene resin with a thermal conductivity of 0.2 W/(m·K)). Further, the "(semi)transparent" is a concept that includes transparency and semitransparency. More specifically, if a color of the ink 14 disposed inside the pen tip holder 12 can be visually seen (if it is visually recognizable) through the pen tip holder 12 when the pen tip holder 12 is viewed from the outside in the radial direction, it is referred to as "transparent" or "semitransparent". Also, the above-described (semi)transparent resin is not limited to a colorless transparent of semitransparent resin, but may also be a transparent or semitransparent resin to which a predetermined color such as, for example, white is applied. Thereby, the inside of the pen tip holder 12 between a rear end of the pen tip 11 and a front end of the ink storage tube 13 is configured such that it can be seen through from the outside, and the ink 14 inside the pen tip holder 12 is configured such that it can be seen through the pen tip holder 12 from the outside. Further, the pen tip holder 12 may be made of a resin (for example, a polyacetal resin, a polypropylene resin, or a polyethylene resin) or a metal (for example, brass). The pen tip holder 12 is formed of a softer member (a member with a lower hardness) than the ink storage tube 13.

### <Ink storage tube>

As illustrated in FIGS. 1 to 4, the ink storage tube 13 has a tubular shape and extends in the axial direction. The ink storage tube 13 of the present embodiment is a tubular body made of a metal. The ink storage tube 13 is a cylindrical body formed of stainless steel and opening at both ends. The ink storage tube 13 is preferably formed of an austenitic stainless steel material (for example, SUS304, SUS316, SUS321, and the like). More preferably, the ink storage tube 13 is made of SUS304 with a thermal conductivity of 16 W/(m·K).

The circumferential swaged part 131 is formed on a front end side outer circumferential surface of the ink storage tube 13. That is, the ink storage tube 13 has the circumferential swaged part 131 disposed at the front end portion of the ink storage tube 13. The circumferential swaged part 131 has an annular shape centered on the central axis O and extends in the circumferential direction. The circumferential swaged part 131 is formed by swaging processing (beading method) or the like in which a circumferential wall of the ink storage tube 13 is pressed from a radially outer side over the entire circumference by a roll (not illustrated) or the like. The circumferential swaged part 131 is recessed radially inward from an outer circumferential surface of the circumferential wall of the ink storage tube 13 and protrudes radially inward from an inner circumferential surface of the circumferential wall. Therefore, an inner surface of the circumferential swaged part 131 bites into the rear end side outer circumferential surface of the pen tip holder 12. The pen tip holder 12 and the ink storage tube 13 are prevented from coming off in the axial direction and are locked by such a circumferential swaged part 131.

An outer diameter of the ink storage tube 13 in the vicinity of the circumferential swaged part 131 is φ4.5 mm or more. That is, an outer diameter dimension of a portion of the ink storage tube 13 adjacent to the circumferential swaged part 131 in the axial direction is φ4.5 mm or more. The circumferential swaged part 131 is formed of a straight surface 132 having a constant outer diameter in the axial direction and tapered surfaces 133 formed on both front and rear sides of the straight surface 132. In the present embodiment, the ink storage tube 13 is a straight tubular body having the same outer diameter (φ6.1 mm) from the front end to the rear end except for the portion in which the circumferential swaged part 131 is disposed.

Of a pair of tapered surfaces 133 of the circumferential swaged part 131, one tapered surface 133 positioned on the front side has a tapered tubular shape whose diameter increases toward the front side. Also, of the pair of tapered surfaces 133, the other tapered surface 133 positioned on the rear side has a tapered tubular shape whose diameter decreases toward the front side. That is, the pair of tapered surfaces 133 are inclined in different directions with respect to the central axis O. The pair of tapered surfaces 133 are disposed at a distance from each other in the axial direction. Further, each of the tapered surfaces 133 may be rephrased as a tapered tubular part 133 of the like.

The straight surface 132 of the circumferential swaged part 131 has a cylindrical shape centered on the central axis O. The straight surface 132 has a constant diameter dimension in the axial direction. The straight surface 132 is disposed between the pair of tapered surfaces 133 in the axial direction. A front end portion of the straight surface 132 is connected to a rear end portion of one tapered surface 133. A rear end portion of the straight surface 132 is connected to a front end portion of the other tapered surface 133. Further, the straight surface 132 may be rephrased as a straight tubular part 132 or the like.

Generally, if an outer diameter of the ink storage tube is φ2.5 mm or more and φ4.0 mm or less, since an outer diameter of the refill is small, it can be used as a refill for a multi-core writing instrument. On the other hand, if an outer diameter of the ink storage tube 13 is φ4.5 mm or more, since an outer diameter of the refill is large, it can be used as a single-core writing instrument refill.

Here, an outer diameter of a fitting portion at a rear end of the pen tip holder 12 of the refill for the single-core writing instrument is larger than an outer diameter of a fitting portion at a rear end of the pen tip holder 12 of the refill for the multi-core writing instrument. Then, as the outer diameter of the fitting portion at the rear end of the pen tip holder 12 becomes larger, there is a likelihood that shrinkage or warping of the fitting portion at the rear end of the pen tip holder 12 will increase.

Further, if the ink storage tube 13 is formed of a metal material, flexibility thereof is lower than that of an ink storage tube formed of a resin material. Specifically, since the ink storage tube 13 of the present embodiment is made of a metal, it does not extend or contract (increase or decrease in diameter) in the radial direction. That is, the fitting portion (rear end portion) of the pen tip holder 12 that fits appropriately with the ink storage tube 13 has a small tolerance of dimensional variation. Then, if the dimensions fall outside a range for appropriate fitting, there is a likelihood that ink leakage will occur.

From the above, if the ink storage tube 13 is formed of a metal material and has an outer diameter of φ4.5 mm or more, in the conventional technology, it has been difficult to obtain stable sealing performance at the fitting portion between the ink storage tube and the pen tip holder, and there has been a likelihood that ink leakage may occur.

According to the embodiment of the present invention, when an outer diameter of the ink storage tube 13 in the vicinity of the circumferential swaged part 131 is φ4.5 mm or more, a shape of the circumferential swaged part 131 can be reliably formed by the circumferential swaged part 131 being formed of the straight surface 132 having a constant outer diameter in the axial direction and the tapered surfaces 133 formed on both front and rear sides of the straight surface 132 as described above. Therefore, ink leakage from a fitting portion (press-fitting portion) between the pen tip holder 12 and the ink storage tube 13 can be curbed.

Also, since the circumferential swaged part 131 includes the straight surface 132, a shape of an inner surface of the swaged part is stabilized, stable sealing performance can be obtained, and thereby ink leakage can be curbed. Further, the inner surface of the swaged part refers to an inner surface portion of the inner surface (inner circumferential surface) of the ink storage tube 13 at which the circumferential swaged part 131 is positioned.

Also, as illustrated in FIG. 4, provided that an axial length of the straight surface 132 is W and a thickness of the ink storage tube 13 is t, a conditional expression W ≥ t is preferably satisfied. In this case, when the straight surface 132 having the axial length W equal to or larger than the thickness t of the ink storage tube 13 is formed, deformation of an outer surface of the ink storage tube 13 due to swaging is reliably reflected on an inner surface of the ink storage tube 13, and more reliable sealing performance can be obtained by the circumferential swaged part 131.

Also, provided that the axial length of the straight surface 132 is W and the thickness of the ink storage tube 13 is t, a conditional expression 1 ≤ W/t ≤ 4 is preferably satisfied.

When a value of W/t is 1 or more, the axial length W of the straight surface 132 is stably secured, and liquid tightness (airtightness) of the fitting portion between the pen tip holder 12 and the ink storage tube 13 is maintained satisfactorily.

Also, when the value of W/t is 4 or less, the axial length W of the straight surface 132 becoming too large can be curbed, and a force required for beading method becoming excessive can be curbed when the circumferential swaged part 131 is formed. Therefore, it is possible to stably provide a clear and sharp shape (beading shape) of the circumferential swaged part 131 without reducing production efficiency (productivity). Stable sealing performance can be obtained by the circumferential swaged part 131, and occurrence of ink leakage can be curbed more reliably. Further, in the present embodiment, W = 0.4 mm and t = 0.2 mm. That is, W/t = 2.

Also, the axial length W of the straight surface 132 is preferably 0.8 mm or less.

In this case, the axial length W of the straight surface 132 becoming too large can be curbed, and a force required for beading method becoming excessive can be curbed when the circumferential swaged part 131 is formed. Therefore, it is possible to stably provide a clear and sharp shape (beading shape) of the circumferential swaged part 131 without reducing production efficiency (productivity). Stable sealing performance can be obtained by the circumferential swaged part 131, and occurrence of ink leakage can be curbed more reliably.

Also, as illustrated in FIG. 4, provided that a radial depth of the circumferential swaged part 131 is A, a conditional expression A ≤ t is preferably satisfied. In this case, when the radial depth A of the circumferential swaged part 131 is suppressed to the thickness t or less of the ink storage tube 13, a thickness variation of the circumferential swaged part 131 is suppressed, and reliable fitting performance can be maintained. Further, the thickness variation refers to a difference between a thickness of the portion of the circumferential wall of the ink storage tube 13 other than the swaged part (the circumferential swaged part 131) and a thickness of a minimum diameter portion of the swaged part. In the present embodiment, A = 0.15 mm, and the thickness variation can be suppressed to within 0.01 mm.

Also, as illustrated in FIG. 4, provided that a taper angle of the tapered surface 133 of the circumferential swaged part 131 is θ, it is preferable that 90° ≤ θ ≤ 150°. Further, the taper angle θ refers to an angle (opening angle) formed between the pair of tapered surfaces 133 of the circumferential swaged part 131 in a longitudinal sectional view (cross-sectional view along the central axis O) illustrated in FIG. 4. If θ < 90°, the shape of the circumferential swaged part 131 becomes an acute angle, and the thickness variation of the ink storage tube 13 increases. As a result, there is a likelihood that a strength of the circumferential swaged part 131 will be reduced.

On the other hand, if θ > 150°, the shape of the circumferential swaged part 131 becomes more obtuse, making it difficult to form a clear (that is, clear and sharp) shape of the swaged part, and there is a likelihood that stable sealing performance cannot be obtained. Further, in the present embodiment, θ = 140°.

Also, as illustrated in FIG. 4, provided that a distance from the front end portion of the ink storage tube 13 to a front end side of the straight surface 132 (a position of the circumferential swaged part 131 from an end surface) is B, it is preferable that 1 mm ≤ B ≤ 4 mm. Specifically, the distance B refers to an axial dimension between a front end opening edge (an end surface facing the front) of the ink storage tube 13 and the front end of the straight surface 132. If B < 1 mm, since a distance between the front end portion of the ink storage tube 13 and the circumferential swaged part 131 is small, there is a likelihood of generating wobbling of the pen tip holder 12. On the other hand, if B > 4 mm, since a gap between the ink storage tube 13 and the circumferential swaged part 131 is wide, the pen tip holder 12 needs to be inserted further into the back of the ink storage tube 13, and there is a likelihood that press-fitting insertion of the pen tip holder 12 will become difficult.

Also, as illustrated in FIG. 3 or 4, in the present embodiment, a chamfered portion 13a is provided on an inner surface of an end portion of the ink storage tube 13. That is, the ink storage tube 13 has the chamfered portion 13a disposed inside a front end opening of the ink storage tube 13. The chamfered portion 13a is positioned at a front end portion of the inner circumferential surface of the ink storage tube 13. An inner diameter dimension of the chamfered portion 13a increases toward the front side. Further, the chamfered portion refers to a portion in which, for example, a C chamfer, an R chamfer, or the like is formed, and is applicable to both a concave corner portion and a convex corner portion. The chamfered portion 13a in the present embodiment is a C chamfer.

### <Tail plug>

As illustrated in FIG. 1, the writing instrument refill 10 of the present embodiment includes the tail plug 15 at a rear end thereof. The tail plug 15 includes an air hole provided to open toward the rear end. The air hole allows ventilation between the inside and outside of the ink storage tube 13.

As illustrated in FIG. 1, in the present embodiment, a front end side outer circumferential surface of the tail plug 15 and a rear end side inner circumferential surface of the ink storage tube 13 are press-fit inserted. That is, a front end portion of the tail plug 15 is fitted into a rear end portion of the ink storage tube 13 by press-fitting. Further, in the present embodiment, the front end side outer circumferential surface may be rephrased as a front end portion outer circumferential surface or the like. Also, the rear end side inner circumferential surface may be rephrased as a rear end portion inner circumferential surface or the like.

Also, on a rear end side outer circumferential surface of the ink storage tube 13, a plurality of dot-shaped swaged parts 13b are disposed discretely from each other in the circumferential direction. The plurality of swaged parts 13b are disposed at a regular pitch in the circumferential direction at the rear end portion of the ink storage tube 13. For example, three or more swaged parts 13b are provided to be aligned in the circumferential direction. The swaged parts 13b are each recessed radially inward from the outer circumferential surface of the circumferential wall of the ink storage tube 13 and protrudes radially inward from the inner circumferential surface of the circumferential wall. Therefore, an inner surface of the swaged part 13b bites into a front end side outer circumferential surface of the tail plug 15. Thereby, the tail plug 15 and the ink storage tube 13 are prevented from coming off in the axial direction and are locked. Further, the swaged part 13b may be rephrased as a dot-shaped swaged part 13b or the like.

Also, the tail plug 15 is formed of a synthetic resin (polyacetal resin, 0.25 W/(m·K)). That is, the tail plug 15 is made of a resin. The tail plug 15 has the front end portion that is inserted through the rear end portion of the ink storage tube 13 and a rear end portion that protrudes rearward of the ink storage tube 13. Further, the tail plug 15 may be made of a resin (for example, a polypropylene resin, a polyethylene resin, a polycarbonate resin, an ABS resin, or the like) other than those described above.

<Ink>

In the present embodiment, the ink 14 stored in the ink storage tube 13 is a thermochromic ink. Since the ink storage tube 13 of the present embodiment is a metal tubular body that does not allow external light to pass through to the inside, photodegradation of the thermochromic ink can be avoided, and moisture of the water-based thermochromic ink permeating through the ink storage tube 13 during long-term storage can be curbed.

The thermochromic ink is preferably a reversible thermochromic ink. The reversible thermochromic ink can be formed of various types such as a heating decoloring type that is decolored by heating from a colored state, a color memory retention type that memorizes and retains a colored state or decolored state reversibly in a specific temperature range, or a heating coloring type that develops color by heating from a decolored state and returns to the decolored state by cooling from a colored state, either individually or in combination.

As a color material contained in the reversible thermochromic ink, a reversible thermochromic pigment in which a reversible thermochromic composition, which contains at least three essential components of, for example, (A) electron donating coloring organic compound, (B) electron-accepting compound, and (C) a reaction medium determining an onset temperature of a reaction (color reaction) in which both of the two described above chemically combine together, is encapsulated in a microcapsule is preferably used.

Further, the ink 14 used in the present invention is not limited to the thermochromic ink, and other ink compositions other than the thermochromic ink can also be used. For example, a writing ink, a correction fluid, a liquid adhesive, a cosmetic liquid, or the like may be selected as appropriate according to applications as a liquid discharging tool. The writing ink is not particularly limited to an oil-based ink, a water-based ink, or the like, and an ink having shear thinning properties can also be used.

Further, when a correction fluid, a liquid adhesive, a cosmetic liquid, or the like is used instead of the ink 14, the "ink" that is a component of the present invention may be rephrased as an application liquid or the like. Similarly, the "ink storage tube" may be rephrased as an application liquid storage tube, the "writing part" may be rephrased as an application part, the "writing instrument refill" may be rephrased as an applicator refill, and the like.

### <Ink backflow preventer>

Although not particularly illustrated in the drawings, an ink backflow preventer made of a high-viscosity fluid, disposed at the rear end of the thermochromic ink (the ink 14), and moving forward as the ink is consumed is accommodated in the ink storage tube 13. As the ink backflow preventer, for example, a liquid plug can be exemplified. The liquid plug is made of, for example, a non-volatile liquid and/or a low-volatile liquid (base oil). Specifically, examples thereof include Vaseline, spindle oil, castor oil, olive oil, refined mineral oil, liquid paraffin, polybutene, α-olefin, α-olefin oligomer or cooligomer, dimethyl silicone oil, methylphenyl silicone oil, amino-modified silicone oil, polyether modified silicone oil, fatty acid modified silicone oil, and the like, and one type may be used alone, or two or more types may be used together.

A non-volatile liquid and/or a low-volatile liquid may be thickened to a suitable viscosity by adding a gelling agent. Examples of the gelling agent include, for example, silica with a hydrophobically treated surface, microparticulate silica with a methylated surface, aluminum silicate, swellable mica, clay-based thickeners such as hydrophobically treated bentonite or montmorillonite, fatty acid metal soaps such as magnesium stearate, calcium stearate, aluminum stearate, and zinc stearate, Tribenzylidene sorbitol, fatty acid amide, amide modified polyethylene wax, hydrogenated castor oil, dextrin-based compounds such as fatty acid dextrin, and cellulose-based compounds. Polybutene or silicone oil is preferably used as the base oil for the ink backflow preventer, and fatty acid amide or silica is preferably used as the thickener.

### <Second embodiment>

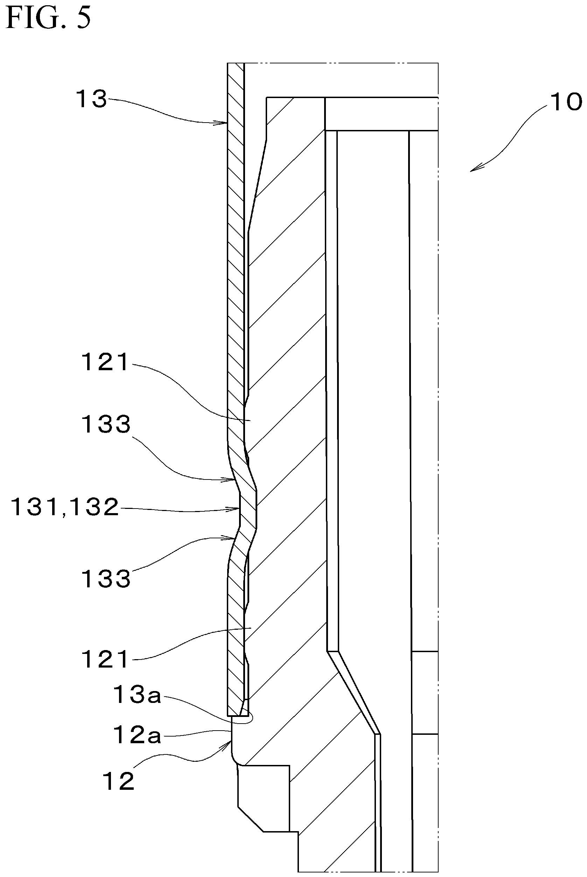

FIG. 5 is a view illustrating a vicinity of a circumferential swaged part 131 of a writing instrument refill 10 according to a second embodiment of the present invention, and is a longitudinal sectional view corresponding to FIGS. 3 and 4 of the first embodiment described above. As illustrated in FIG. 5, the writing instrument refill 10 of the second embodiment is different from that of the first embodiment in a form of a rear end side outer circumferential surface of a pen tip holder 12. The other configurations of the second embodiment are substantially the same as those of the first embodiment, and detailed description thereof will be omitted.

As illustrated in FIG. 5, a plurality of annular protrusions 121 are provided on the pen tip holder 12 on the rear end side outer circumferential surface. That is, the pen tip holder 12 has the annular protrusions 121 disposed on the rear end side outer circumferential surface (rear end portion outer circumferential surface) of the pen tip holder 12. The annular protrusions 121 protrude radially outward from the rear end side outer circumferential surface of the pen tip holder 12 and extend in a circumferential direction. The annular protrusions 121 are annular ribs centered on a central axis O. The annular protrusions 121 are disposed at a portion of a rear end portion of the pen tip holder 12 on a rear side of a flange part 12a. Thereby, when the rear end side outer circumferential surface of the pen tip holder 12 and a front end side inner circumferential surface of an ink storage tube 13 are press-fit inserted, a dimension setting in which the rear end side outer circumferential surface of the pen tip holder 12 is not scraped by the ink storage tube 13 is facilitated.

Also, as illustrated in FIG. 5, it is preferable that two annular protrusions 121 be provided in an axial direction. That is, in the present embodiment, the pen tip holder 12 has the plurality of annular protrusions 121 disposed to be aligned in the axial direction on the rear end side outer circumferential surface of the pen tip holder 12. Thereby, when the rear end side outer circumferential surface of the pen tip holder 12 and the front end side inner circumferential surface of the ink storage tube 13 are press-fit inserted, a stable press-fit insertion state can be obtained without generating any wobbling of the pen tip holder 12.

In the present embodiment, the plurality (pair) of annular protrusions 121 are disposed at a distance from each other in the axial direction. Also, the circumferential swaged part 131 is disposed between the plurality of annular protrusions 121 in the axial direction. Thereby, during swaging processing, wobbling of the pen tip holder 12 is less likely to be generated, and highly accurate beading method can be performed stably. A fitted state between the pen tip holder 12 and the ink storage tube 13 becomes more stable.

Also, in the present embodiment, one of the pair of annular protrusions 121 positioned on a front side and the circumferential swaged part 131 are disposed apart from each other in the axial direction. As described above, when the circumferential swaged part 131 is disposed apart from the annular protrusion 121 in the axial direction, an effect of suppressing generation of wobbling of the pen tip holder 12 during swaging processing can be more stably obtained.

Also, in the present embodiment, the other of the pair of annular protrusions 121 positioned on a rear side and the circumferential swaged part 131 are disposed to overlap when viewed from the radial direction. More specifically, at least a portion (rear end portion) of the circumferential swaged part 131 overlaps at least a portion (front end portion) of the other annular protrusion 121 when viewed from the radial direction.

As described above, when the circumferential swaged part 131 is disposed to overlap the annular protrusion 121 when viewed from the radial direction, adhesion (sealing properties) between the rear end side outer circumferential surface of the pen tip holder 12 and the front end side inner circumferential surface of the ink storage tube 13 can be improved.

Further, the present invention is not limited to the above-described embodiments, and a change to the configuration or the like can be made, for example, as described below within a range not departing from the spirit of the present invention.

In the first and second embodiments described above, an example in which the ink storage tube 13 is made of stainless steel has been taken, but the present invention is not limited thereto. The ink storage tube 13 may be made of a metal such as aluminum (aluminum alloy) or copper (copper alloy).

Also, the writing instrument refill is not limited to a ballpoint pen refill. The writing instrument refill may be, for example, a marker refill or the like.

In the present invention, the configurations described in the embodiments and modified examples described above may be combined within a range not departing from the spirit of the present invention, and additions, omissions, replacements, and other changes to the configurations can be made. Also, the present invention is not to be considered as being limited by the embodiments described above and is only limited by the scope of the claims.

### [Industrial Applicability]

According to the writing instrument refill of the present invention, ink leakage can be curbed in a refill having a metal ink storage tube with an outer diameter of φ4.5 mm or more. Therefore, it has industrial applicability.

### [Reference Signs List]

10 Writing instrument refill
11 Pen tip
111 Writing part
12 Pen tip holder
121 Annular protrusion
13 Ink storage tube
131 Circumferential swaged part
132 Straight surface
133 Tapered surface
14 Ink
15 Tail plug
W Axial length of straight surface
t Thickness of ink storage tube
A Radial depth of circumferential swaged part
B Position of circumferential swaged part from end surface (axial distance between front end surface of ink storage tube and front end of straight surface of circumferential swaged part)
θ Taper angle

## Claims

1. A writing instrument refill comprising:
an ink storage tube storing an ink therein;
a pen tip provided on a distal end side of the ink storage tube and including a writing part; and
a pen tip holder to which the ink storage tube and the pen tip are respectively connected, wherein
the ink storage tube is a tubular body made of a metal,
a rear end side outer circumferential surface of the pen tip holder and a front end side inner circumferential surface of the ink storage tube are press-fit inserted, and a circumferential swaged part is formed on a front end side outer circumferential surface of the ink storage tube,
an outer diameter of the ink storage tube in the vicinity of the circumferential swaged part is φ4.5 mm or more, and
the circumferential swaged part is formed of a straight surface having a constant outer diameter in an axial direction and tapered surfaces formed on both front and rear sides of the straight surface.

2. The writing instrument refill according to claim 1, wherein a conditional expression W ≥ t is satisfied provided that an axial length of the straight surface is W and a thickness of the ink storage tube is t.

3. The writing instrument refill according to claim 2, wherein a conditional expression A ≤ t is satisfied provided that a radial depth of the circumferential swaged part is A.

4. The writing instrument refill according to claim 1, wherein a conditional expression 1 ≤ W/t ≤ 4 is satisfied provided that an axial length of the straight surface is W and a thickness of the ink storage tube is t.

5. The writing instrument refill according to claim 1, wherein an axial length W of the straight surface is 0.8 mm or less.

6. The writing instrument refill according to claim 1, wherein
the pen tip holder has a plurality of annular protrusions disposed to be aligned in the axial direction on the rear end side outer circumferential surface of the pen tip holder, and
the circumferential swaged part is disposed between the plurality of annular protrusions in the axial direction.

7. The writing instrument refill according to claim 6, wherein the circumferential swaged part is disposed apart from the annular protrusions in the axial direction.

8. The writing instrument refill according to claim 1, wherein
the pen tip holder has an annular protrusion disposed on the rear end side outer circumferential surface of the pen tip holder, and
the circumferential swaged part is disposed to overlap the annular protrusion when viewed from a radial direction.

9. The writing instrument refill according to any one of claims 1, wherein the ink is a thermochromic ink.
